# EUROPÄISCHE PATENTSCHRIFT

(11) **EP 1 516 295 B1**
(45) Veröffentlichungstag und Bekanntmachung des Hinweises auf die Patenterteilung: **17.05.2006**
(21) Anmeldenummer: 03740223.7
(22) Anmeldetag: 11.06.2003
(51) Int. Cl.: G07D 11/00

(54) **VORRICHTUNG UND VERFAHREN FÜR DIE BEARBEITUNG VON BANKNOTEN**
DEVICE AND METHOD FOR PROCESSING BANKNOTES
DISPOSITIF ET PROCEDE DE TRAITEMENT DE BILLETS DE BANQUE

(30) Priorität: 14.06.2002 DE 10226540
(43) Veröffentlichungstag der Anmeldung: 23.03.2005
(73) Patentinhaber: Giesecke & Devrient GmbH, 81677 München (DE)
(72) Erfinder: DEMMELER, Erwin, 87700 Memmingen (DE); SCHMIDT, Alfred, 81377 München (DE); WERNER, Frank, 81737 München (DE)
(74) Vertreter: Klunker . Schmitt-Nilson . Hirsch
(86) Internationale Anmeldenummer: PCT/EP2003/006128
(87) Internationale Veröffentlichungsnummer: WO 2003/107279

(56) Entgegenhaltungen:
- EP-A- 1 111 553
- DE-A- 10 049 435
- US-A- 3 778 596
- US-A- 5 247 159
- US-A1- 2002 023 954

## Beschreibung

Die vorliegende Erfindung betrifft eine Vorrichtung für die Bearbeitung von Banknoten, die als getrennte Einzahlungen vorliegen.

Vorrichtungen und Verfahren für die Bearbeitung von Banknoten, die als getrennte Einzahlungen (Deposits) vorliegen, sind bekannt. Dabei werden die getrennten Einzahlungen vor der Bearbeitung mit einer Banknotenbearbeitungsmaschine für die anstehende Bearbeitung vorbereitet. Dazu werden insbesondere Daten bzw. Informationen der Einzahlung erfaßt und für die Bearbeitung der Banknotenbearbeitungsmaschine zur Verfügung gestellt. Die Daten können dabei Angaben über den Einzahler, eine Kontonummer, die Menge und den Wert der die Einzahlung bildenden Banknoten usw. umfassen. Um eine unterbrechungsfreie Bearbeitung durch die Banknotenbearbeitungsmaschine zu ermöglichen, werden die Einzahlungen voneinander durch Trennkarten getrennt, die zwischen verschiedene Einzahlungen eingefügt werden. Von der Banknotenbearbeitungsmaschine werden diese Trennkarten bei der Bearbeitung erkannt und damit auch der Anfang einer neuen Einzahlung.

Eine Einzahlung kann aus mehreren Untereinheiten (Sub-Deposits) bestehen. Eine Untereinheit kann beispielsweise die Tageseinnahmen einer einzelnen Ladenkasse in einer Geschäftsfiliale oder eines einzelnen Bankschalters in einer Bankfiliale enthalten. Solche Untereinheiten werden in der Regel von einer eindeutig verantwortlichen Kassenkraft zusammengestellt und beispielsweise durch Banderolen voneinander abgegrenzt. Die Banderolen sind hierbei in der Regel mit einer Information versehen, die den Verantwortlichen für die Zusammenstellung identifiziert, z.B. durch einen speziellen Stempel und/oder eine Unterschrift. Häufig ist die Banderole auch mit einer Information über den Einzahler, also dem Namen der Ladenkette oder der Bank versehen.

Die Trennung von Untereinheiten mit Banderolen wird häufig angewandt bei der Zusammenstellung von Banknoten mit einer vordefinierten Anzahl von Banknoten einer bestimmten Stückelung, z.B. ein Bündel von 100 Banknoten zu je 100 Euro, und damit einem festen Gesamtwert.

Eine weitere Möglichkeit zur Trennung von Untereinheiten besteht in der Verwendung von versiegelten Tüten, z.B. Safebags, oder verschlossenen Kuverts, die ebenfalls mit Informationen zum Einzahler und dem Verantwortlichen für die Zusammenstellung versehen sind.

Zur Vereinfachung der weiteren Bearbeitung werden die Untereinheiten einer Ladenkette oder einer Bank zu einer Einzahlung in einem Transportbehälter verpackt, der mit einem Einlieferungsbeleg über den Wert der Einzahlung einem Geldbearbeitungszentrum übergeben wird. Das Geldbearbeitungszentrum prüft, ob die Einzahlung den auf dem Einlieferungsbeleg genannten Wert enthält und veranlaßt eine entsprechende Gutschrift auf das Konto des Einzahlers. Falls bei dieser Überprüfung eine Abweichung festgestellt wird oder eine gefälschte Banknote erkannt wird, muß jedoch der Verantwortliche für die Zusammenstellung der Untereinheit ermittelt werden, um ihn ggf. für die Abweichung haftbar zu machen oder als Zeugen für die Entgegennahme einer Fälschung zu befragen. Hierzu ist es notwendig, alle Informationen zu einer Untereinheit bis zum positiven Abschluß der Prüfung aufzubewahren und die zugehörigen Banknoten nicht mit anderen Banknoten zu vermischen, solange ihr Wert nicht eindeutig festgestellt und abgerechnet ist. Dabei kann die Trennung und Identifizierung der Untereinheiten ebenfalls mit Trennkarten erfolgen, die zwischen verschiedene Untereinheiten eingefügt werden.

Zur Verbesserung der Kontinuität der Bearbeitung von Einzahlungen bzw. der die Einzahlungen bildenden Banknoten ist es z. B. aus DE 19512 505 A1 auch bekannt geworden, Behälter, sogenannte Carrier, zu verwenden, in welche die Banknoten der verschiedenen Einzahlungen sowie die die Einzahlungen trennenden Trennkarten eingelegt werden, um sie der Banknotenbearbeitungsmaschine zuzuführen. In diesem Fall werden die Carrier, einer nach dem anderen, von einer Transporteinrichtung in den Bereich eines Vereinzelers der Banknotenbearbeitungsmaschine gebracht und von dem Vereinzeler einzeln aus dem Carrier für die Bearbeitung in der Banknotenbearbeitungsmaschine entnommen.

Es hat sich jedoch bei der Bearbeitung von Banknoten mittels der bekannten Vorrichtungen und Verfahren für die Bearbeitung von Banknoten, die als getrennte Einzahlungen vorliegen, herausgestellt, daß die korrekte Trennung und Integrität der verschiedener Einzahlungen bei Verwendung von Trennkarten nicht mehr sichergestellt ist, falls Störungen in der Banknotenbearbeitungsmaschine auftreten. Dies resultiert aus der Tatsache, daß die Reihenfolge der Banknoten in der Banknotenbearbeitungsmaschine verändert werden kann, wenn beispielsweise ein Stau der Banknoten während ihres Transports durch die Banknotenbearbeitungsmaschine auftritt. In diesem Fall kommt es immer wieder vor, daß Banknoten von verschiedenen Einzahlungen vermischt werden, d. h. eine Banknote, die zu der Einzahlung hinter einer Trennkarte gehört, wird durch den Stau vor die Trennkarte positioniert und somit fälschlicherweise der Einzahlung vor der Trennkarte zugeordnet. Eine exakte Trennung der Einzahlungen ist in diesem Fall kaum mehr möglich, oder sie gelingt nur mit großem Zeitaufwand.

Die DE 100 49 435 A zeigt ein Verfahren für die Bearbeitung von Blattgut (Wertpapiere wie Banknoten, Schecks usw.) bei dem verschiedene Gruppen von Blattgut nacheinander bearbeitet werden, wobei die verschiedenen Gruppen von Blattgut für die Bearbeitung getrennt werden, wodurch eine Bearbeitung der verschiedenen Gruppen von Blattgut erlaubt wird, die sowohl hinsichtlich der Erkennung der verschiedenen Gruppen von Blattgut durch eine Banknotenbearbeitungsmaschine, als auch hinsichtlich der Fehleranfälligkeit bei der Vorbereitung durch einen Bediener verbessert ist. Dabei werden Trennmittel angegeben, die für die Trennung der verschiedenen Gruppen von Blattgut verwendet werden und. Die Trennkarten werden benutzt, um die Grenzen verschiedener Einzahlurigen bei der automatischen Banknotenbearbeitung zu erkennen sowie um zurückgewiesenen Banknoten, d. h. Banknoten die bei der Überprüfung durch eine dementsprechende Sensoreinrichtung und Steuereinrichtung als falsch oder fehlerhaft eingestuft worden sind, voneinander abzugrenzen. Sie sind Belege, die sich in der Banknotenbearbeitungsmaschine wie Banknoten vereinzeln, transportieren und abstapeln lassen, wobei ihre Ausführung so gestaltet ist, dass sie eindeutig von Banknoten unterschieden und daher von der Banknotenbearbeitungsmaschine erkannt werden können.

Aufgabe der vorliegenden Erfindung ist es deshalb eine Vorrichtung für die Bearbeitung von Banknoten, die als getrennte Einzahlungen vorliegen, anzugeben, bei der bei weitestgehend kontinuierlicher Bearbeitung der Einzahlungen eine sichere Trennung der Einzahlungen auch dann möglich ist, falls bei der Bearbeitung Störungen auftreten.

Diese Aufgabe wird erfindungsgemäß durch die Merkmale des Anspruchs 1 gelöst.

Der Vorteil der Erfindung ist insbesondere darin zu sehen, daß durch die Verwendung eines eigenen Trägers bzw. Carriers für jede Einzahlung eine sichere Trennung der Einzahlungen erreicht wird, da jede Einzahlung eindeutig einem Träger zuzuordnen ist. Zudem wird durch den Wechsel der Träger nach der Bearbeitung einer Einzahlung eine kurze Unterbrechung erzeugt, die dafür sorgt, die Banknoten unterschiedlicher Einzahlungen voneinander zu trennen. Diese Trennung ergibt sich, da die in der Banknotenbearbeitungsmaschine befindlichen Banknoten einer Einzahlung in der Regel durch die Banknotenbearbeitungsmaschine vollständig bearbeitet, d.h. gestapelt und abgerechnet, sind, bevor Banknoten der nächsten Einzahlung zur Bearbeitung in die Banknotenbearbeitungsmaschine gelangen. Sollte die Zeitdauer des Wechsels der Träger für eine sichere Vermeidung der Vermischung zu kurz sein, kann der Wechsel der Träger auch verzögert erfolgen. Auf diese Weise wird die Vermischung von Banknoten aus unterschiedlichen Einzahlungen vermieden.

Eine Weiterentwicklung sieht vor, daß der Träger eine in mehrere Untereinheiten getrennt Einzahlung aufnimmt, die durch Trennkarten getrennt ist und kontinuierlich zugeführt werden kann.

Durch die Verwendung von Trennkarten zwischen den Untereinheiten einer Einzahlung kann eine Einzahlung kontinuierlich zugeführt werden, wobei weiterhin eine getrennte Abrechnung der Untereinheiten ermöglicht ist. Bei Störungen in der Banknotenbearbeitungsmaschine kann jedoch, wie bereits erwähnt, die eindeutige Zuordnung der Banknoten zu den Untereinheiten beeinträchtigt werden und damit die Ermittlung des Werts fehlerhaft sein. In den meisten Fällen gleichen sich solche Zuordnungsfehler innerhalb einer Einzahlung aus, so daß die Einzahlung eine Gutschrift entsprechend dem Einlieferungsbeleg erhalten kann und die aufgetretenen Abweichungen nicht weiter verfolgt werden. Im Fall einer nicht ausgleichbaren Abweichung in einer Untereinheit ist aber in jedem Fall sichergestellt, daß der Wert der Einzahlung korrekt ermittelt wird und eine Gutschrift entsprechend dem tatsächlich eingelieferten Wert erfolgt. Mit hoher Wahrscheinlichkeit kann auch die fehlerhafte Untereinheit korrekt ermittelt werden, da sie nur im Fall einer vergleichsweise seltenen Maschinenstörung möglicherweise fehlerbehaftet ist. Der Vorteil dieser Erfindung ergibt sich demnach durch die effiziente kontinuierliche Bearbeitung einer Einzahlung unter Einhaltung eines sehr hohen Sicherheitsniveaus in Kombination mit der Überprüfung der darin enthaltenen Untereinheiten bei einem etwas geringeren Sicherheitsniveau.

Weitere Vorteile der vorliegenden Erfindung ergeben sich aus den abhängigen Ansprüchen sowie der nachfolgenden Beschreibung von Ausführungsformen anhand von Figuren.

Es zeigt:
- Figur 1: eine Gesamtansicht eines prinzipiellen Aufbaus einer Vorrichtung für die Bearbeitung von Banknoten, die als getrennte Einzahlungen vorliegen,
- Figur 2: einen Ausschnitt der Vorrichtung nach Figur 1, bei der Vorbereitung einer Einzahlung für die Bearbeitung, und
- Figur 3: die Handhabung von in den Einzahlungen enthaltenen Banderolen, für eine Überprüfung beim Auftreten von Unstimmigkeiten bei der Bearbeitung der Einzahlungen.

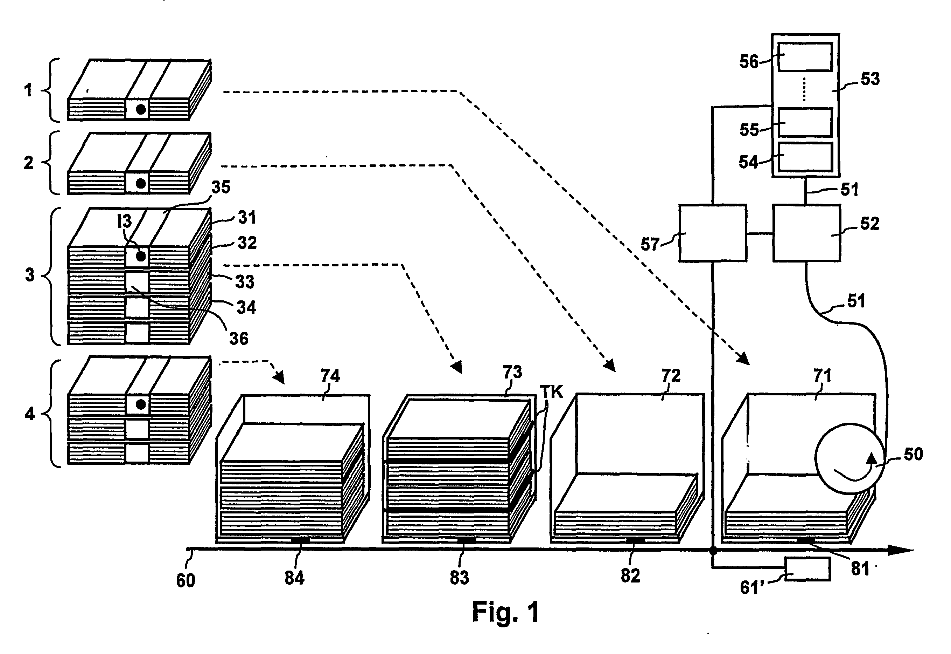

Figur 1 zeigt eine Gesamtansicht eines prinzipiellen Aufbaus einer Vorrichtung für die Bearbeitung von Banknoten, die als getrennte Einzahlungen vorliegen.

Die Vorrichtung für die Bearbeitung von Banknoten besteht im wesentlichen aus einer Banknotenbearbeitungsmaschine 50 bis 57. Die Banknotenbearbeitungsmaschine weist einen Vereinzeler 50, ein Transportsystem 51, eine Prüfeinrichtung 52, eine Ablageeinrichtung 53 und eine Steuereinrichtung 57 auf. Zu bearbeitende Banknoten werden von dem Vereinzeler 50 erfaßt und einzeln, eine nach der anderen, an das Transportsystem 51 übergeben. Das Transportsystem 51 transportiert die einzelnen Banknoten durch die Prüfeinrichtung 52, die aus mehreren Sensoren bestehen kann, die unterschiedliche Eigenschaften der Banknoten prüfen. Die von der Prüfeinrichtung 52 zur Verfügung gestellten Daten werden von der Steuereinrichtung 57 ausgewertet und für die Steuerung der Ablage der Banknoten in der Ablageeinrichtung 53 verwendet, die mehrere Ablagefächer 54 bis 56 aufweisen kann. Die beschriebene Banknotenbearbeitungsmaschine 50 bis 57 kann beispielsweise dazu verwendet werden, die Banknoten auf Echtheit und Stückelung zu überprüfen und die ermittelten Werte für eine Abrechnung zur Verfügung zu stellen. Dadurch kann beispielsweise für jede Einzahlung ermittelt werden, wie viele Banknoten diese enthält und welchen Gesamtwert sie darstellt. Weiterhin können die Banknoten verschiedener Stückelungen unter Steuerung der Steuereinrichtung 57 vom Transportsystem 51 in verschiedene Ablagefächer 54 bis 56 der Ablageeinrichtung 53 transportiert werden, um sie gemäß ihrer Stückelung zu sortieren.

In Figur 1 ist weiterhin die Bearbeitung von vier getrennten Einzahlungen 1 bis 4 dargestellt.

Die Einzahlungen 1 bis 4 bestehen aus jeweils einem oder mehreren Bündeln von Banknoten, die mittels Banderolen gebildet werden. Zur Erkennung der Grenzen zwischen den Einzahlungen ist das jeweils erste Bündel einer Einzahlung markiert. Ebenso kann die Markierung am Ende der Einzahlung, d. h. am letzten Bündel einer Einzahlung angebracht sein oder am ersten und am letzten Bündel einer Einzahlung. Eine solche Markierung kann beispielsweise.durch eine aufgedruckten oder aufgeklebten Barcode oder durch eine spezielle farbliche Markierung mit festgelegter Farbe und/oder Position der Markierung erfolgen.

Von den Bündeln der einzelnen Einzahlungen 1 bis 4 werden die Banderolen entfernt und die losen Banknoten der einzelnen Bündel der Einzahlungen 1 bis 4 werden in Träger 71 bis 74, auch Carrier genannt, eingelegt. Dabei werden in jeweils einen Träger 71 bis 74 jeweils nur die Banknoten einer einzigen Einzahlung 1 bis 4 eingelegt. Wie in der Figur 1 dargestellt, enthält der Träger 71 nur die Banknoten der ersten Einzahlung 1, der Träger 72 nur die Banknoten der zweiten Einzahlung 2, der Träger 73 nur die Banknoten der dritten Einzahlung 3 usw. Zur eindeutigen Kennzeichnung der Träger 71 bis 74 können die Träger 71 bis 74 eindeutige Markierungen 81 bis 84 aufweisen.

Bei der Bearbeitung der Einzahlungen 1 bis 4 durch die Banknotenbearbeitungsmaschine 50 bis 57 werden zuerst die Banknoten der ersten Einzahlung 1 von dem Vereinzeler 50 aus dem Träger 71 erfaßt und für die erste Einzahlung 1 wird von der Steuereinrichtung 57 eine Abrechnung erstellt. Um die Zuordnung zur ersten Einzahlung 1 vornehmen zu können, ist ein Sensor 61' vorhanden, der die eindeutige Markierung 81 des Trägers 71 erfaßt und der Steuereinrichtung 57 zur Verfügung stellt. Nachdem alle Banknoten der ersten Einzahlung 1 vereinzelt bzw. bearbeitet wurden, wird der nächsten Träger 72, der die zweite Einzahlung 2 enthält, von einer Transporteinrichtung 60, unter Steuerung der Steuereinrichtung 57, in den Bereich des Vereinzelers 50 gebracht, damit die zweite Einzahlung 2 von der Banknotenbearbeitungsmaschine 50 bis 57 bearbeitet werden kann. Entsprechend werden weitere Einzahlungen bzw. Träger bearbeitet.

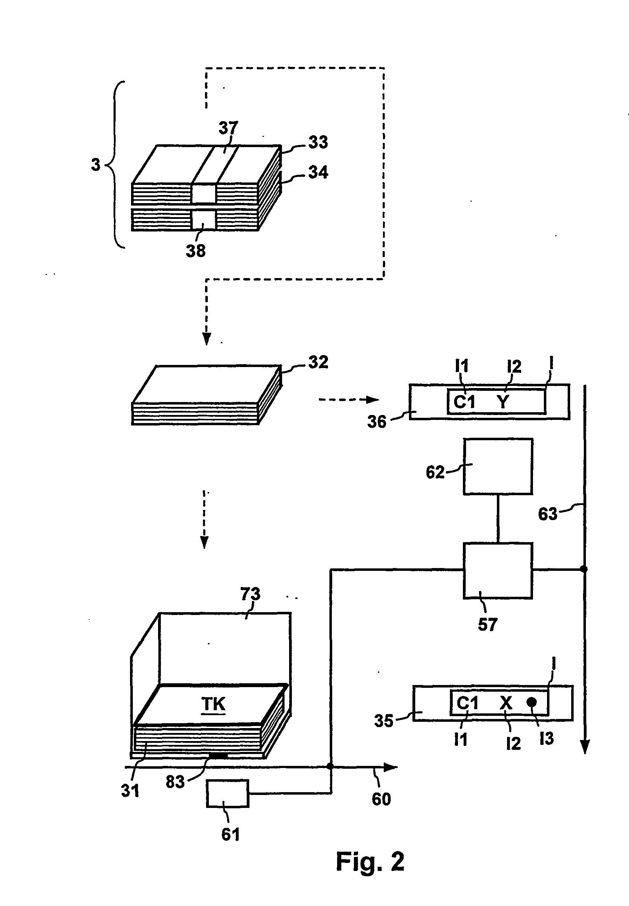

In Figur 2 ist ein Ausschnitt der Vorrichtung nach Figur 1 dargestellt, beispielhaft bei der Vorbereitung der dritten Einzahlung für die Bearbeitung.

Die dritte Einzahlung 3 besteht aus vier Bündeln 31 bis 34, die mittels Banderolen 35 bis 38 gebildet werden. Die Banderolen 35 bis 38 weisen die Einzahlung 3 bzw. die einzelnen Bündel 31 bis 34 kennzeichnende Daten bzw. Informationen I auf. Die Informationen I bestehen aus einer ersten Information I1, die beispielsweise Auskunft über den Einzahler gibt und/oder eine eindeutige Identifizierung aufweist, beispielsweise eine laufende Nummer für jedes Bündel, die dem Einzahler zugeordnet werden kann. Weiterhin ist eine zweite Information I2 vorhanden, die eine weitere Unterteilung innerhalb einer Einzahlung erlaubt. Bündel innerhalb einer Einzahlung mit der selben zweiten Information I2 werden beispielsweise als zusammengehörig betrachtet. Eine dritte Information I3 der Banderole 35 des ersten Bündels 31 dient der oben beschriebenen Markierung des Beginns der dritten Einzahlung 3. Die dritte Information I3 kann beispielsweise aus einem Punkt bestehen, der auf die Banderole des ersten Bündels einer Einzahlung geklebt werden kann, nachdem die Einzahlung vollständig gebildet wurde. In einer anderen Ausprägung kann die dritte Information I3 aus einem Balkencode bestehen, der beispielsweise bei der Entgegennahme der Einlieferung und Öffnung des Transportbehälters durch das Geldbearbeitungszentrum aufgebracht wurde. Die Informationen I werden von einem Sensor 62 erfaßt und der Steuereinrichtung 57 zur Verfügung gestellt.

Zum Zeitpunkt der Darstellung ist das erste Bündel 31 bereits vorbereitet und die Banknoten des ersten Bündels 31 sind in dem Träger 73 abgelegt. Da die erste Banderole 35 des ersten Bündels 31 der dritten Einzahlung 3 die den Beginn einer neuen Einzahlung kennzeichnende dritte Information I3 enthält, wurde von der Transporteinrichtung 60, unter Steuerung der Steuereinrichtung 57, der leere Träger 73 in eine Befüllposition gebracht. Die Zuordnung des Trägers 73 zu der dritten Einzahlung erfolgt durch die Erfassung der eindeutigen Markierung 83 des Trägers 73 durch einen Sensor 61, der die Daten der erfaßten Markierung 83 der Steuereinrichtung 57 zur Verfügung stellt. Diese verknüpft die Markierung 83 des Trägers 73 mit den Informationen I der Banderolen 35 bis 38 der dritten Einzahlung 3.

Zum Zeitpunkt der Darstellung gemäß Figur 2 ist die Banderole 36 des zweiten Bündels 32 gerade von dem zweiten Bündel 32 entfernt worden, z. B. durch Abstreifen oder Aufschneiden des Bündels. Die Informationen I der Banderole 36 des zweiten Bündels 32 werden vom Sensor 62 erfaßt und der Steuereinrichtung 57 zur Verfügung gestellt. Diese Informationen I werden - wie oben beschrieben - dem Träger 73 bzw. dessen Markierung 83 zugeordnet. Da die zweite Information I2 (Y) für das zweite Bündel 32 von der zweiten Information I2 (X) des ersten Bündels 31 abweicht, handelt es sich - wie oben beschrieben - um eine Untereinheit innerhalb der dritten Einzahlung 3. Beispielsweise kann die Einzahlung 3 aus den Tageseinnahmen verschiedener Kassen bestehen, die getrennt abgerechnet werden sollen. Aus diesem Grund wurde auf die im Träger 73 abgelegten Banknoten des ersten Bündels 31 eine Trennkarte TK abgelegt, welche die Banknoten des ersten Bündels 31 von den Banknoten des zweiten Bündels 32 trennt, um eine getrennte Abrechnung in der Banknotenbearbeitungsmaschine 50 bis 57 zu ermöglichen. Die Trennkarte TK kann ebenfalls eindeutige Merkmale, z.B. eine Identifizierungsnummer, aufweisen, die in der Banknotenbearbeitungsmaschine 50 bis 57 bei der späteren Bearbeitung ausgewertet werden. Die Zuführung der Trennkarte TK erfolgt mit einer hier nicht dargestellten Spendevorrichtung, die eine Trennkarte TK von einem Stapel mit bereits vorgefertigten Trennkarten abzieht und die zugehörige Identifizierungsnummer an die Steuerung 57 meldet. Dies erlaubt eine direkte Verknüpfung der durch den Sensor 62 erfaßten Informationen auf der Banderole mit der Trennkarte TK.

Die Banderolen 35 und 36 des ersten und zweiten Bündels 31 und 32 werden in einer Speichereinrichtung 63, deren Funktion nachfolgend erläutert wird, während der Bearbeitung der Einzahlung 3 durch die Banknotenbearbeitungsmaschine 50 bis 57 aufbewahrt.

Nach der Erfassung der Informationen I der Banderole 36 des zweiten Bündels 32 werden die Banknoten des zweiten Bündels 32 in den Träger 73 auf die Trennkarte TK abgelegt. Anschließend wird mit den restlichen Bündeln 33 und 34 der dritten Einzahlung 3 in der oben beschriebenen Weise verfahren. Sobald der Beginn der vierten Einzahlung 4 durch eine auf der Banderole angebrachte dritte Information I3 vom Sensor 62 erfaßt wird, wird der Träger 73 von der Transporteinrichtung 60, unter Steuerung der Steuereinrichtung 57, abtransportiert und der nächste Träger 74 wird von der Transporteinrichtung 60 zur Befüllposition transportiert.

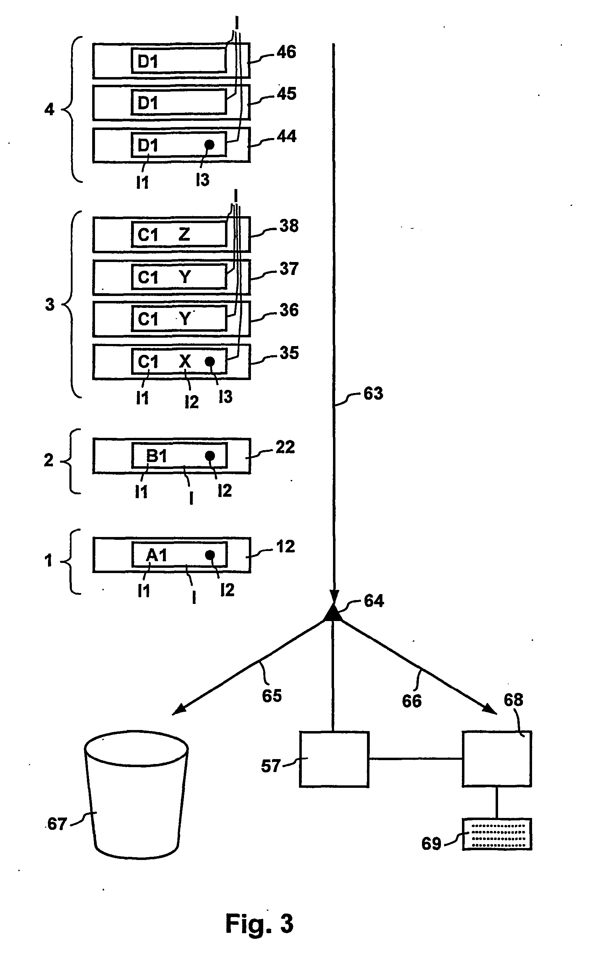

Figur 3 zeigt die Handhabung von in den Einzahlungen 1 bis 4 enthaltenen Banderolen 12 bis 46 für eine Überprüfung beim Auftreten von Unstimmigkeiten bei der Bearbeitung der Einzahlungen 1 bis 4.

Der Handhabung der Banderolen 12 bis 46 dient die bereits erwähnte Speichereinrichtung 63, in welcher die Banderolen 12 bis 46 aufbewahrt werden, nachdem die Informationen I durch den Sensor 62 erfaßt wurden. Werden bei der Bearbeitung der Banknoten der Einzahlungen 1 bis 4 durch die Banknotenbearbeitungsmaschine 50 bis 57 keine Unstimmigkeiten festgestellt, werden die Banderolen 12 bis 46 entsorgt. Dies bedeutet, daß die z. B. vom Einzahler stammenden Angaben, insbesondere hinsichtlich des Gesamtwerts der Einzahlung, mit den von der Banknotenbearbeitungsmaschine 50 bis 57 ermittelten Werten übereinstimmen.

Die Speichereinrichtung 63 ist als sogenannter FIFO-Speicher organisiert, d. h. die zuerst in die Speichereinrichtung 63 gegebenen Banderolen 12, 22, ... werden auch zuerst, in dieser Reihenfolge, aus der Speichereinrichtung 63 wieder ausgegeben. Dazu werden die Banderolen aus der Speichereinrichtung 63 über eine Weiche 64 entfernt, die von der Steuereinrichtung 57 gesteuert wird. Bei Übereinstimmung von ermitteltem Gesamtwert und Einzahlerangabe für eine Einzahlung werden die Banderolen der Einzahlung bzw. Untereinheiten über die Weiche 64 und einem Transportpfad 65 einer Entsorgung 67 zugeführt. Treten Abweichungen auf, werden alle oder als unstimmig von der Steuereinrichtung 57 erkannte Banderolen der Einzahlung bzw. Untereinheit für eine Überprüfung über den Transportpfad 66 zur Verfügung gestellt. Für die Überprüfung kann beispielsweise eine Ausgabe-/Eingabeeinrichtung 68, 69 vorgesehen sein, z. B. ein PC, der mit der Steuereinrichtung 57 verbunden ist. Diese Ausgabe-/Eingabereinrichtung 68, 69 ermöglicht beispielsweise einer Bedienerperson die Eingabe von Informationen auf der Banderole, die der Sensor 62 nicht erfassen konnte, sowie den Ausdruck eines Abweichungsprotokolls für den Einzahler, an das die Banderole des fehlerhaften Bündels angeheftet oder auf andere Weise verbunden werden kann (z.B. Einlegetasche).

Die Speichereinrichtung 63 kann als einfache Stapelablage, als kontinuierliches Transportband mit Fächern oder als Aufwickelstation ausgeführt sein. Durch eine Identifizierung der einzelnen Fächer, z.B. in Form von kodierten Fachnummern oder der Erfassung des Transportwegs, kann die Steuereinrichtung 57 die übernommenen Banderolen verfolgen und bei der Ausgabe über die Weiche 64 eindeutig zuordnen.

In einer weiteren Anwendung der Ausgabe-/Eingabeeinrichtung 68, 69 kann die Steuereinrichtung 57 alle relevanten Informationen einer Einzahlung anzeigen. Die Bedienperson kann damit die Abweichungen der Untereinheiten einer Einzahlung überprüfen und ggf. durch Umbuchungen ausgleichen, wenn plausible Hinweise vorliegen, daß die Abweichungen durch eine Maschinenstörung verursacht wurden. In diesem Fall werden die Banderolen der Entsorgung 67 zugeführt. Wird eine nicht ausgleichbare Abweichung bei Untereinheiten festgestellt, werden die zugehörigen Banderolen für spätere Nachforschungen aufbewahrt und können ggf. dem Abweichungsprotokoll beigefügt werden.

Bei den in den Figuren 1 bis 3 dargestellten Beispielen stimmt die Reihenfolge der in der Speichereinrichtung 63 gespeicherten Banderolen nicht mit der Reihenfolge der Zuführung der Banknoten der Bündel durch den Vereinzler 50 in die Banknotenbearbeitungsmaschine 50 bis 57 überein. Dies ergibt sich, weil die Bündel in der vorgegebenen Reihenfolge der Einzahlung in die Träger eingeben werden (z. B. Träger 73 bzw. Einzahlung 3, Reihenfolge der Bündel: 31, 32, 33, 34), der Vereinzeler 50 der Banknotenbearbeitungsmaschine 50 bis 57 (Figur 1) jedoch in den Trägern die Banknoten der zu oberst liegenden Bündel zuerst erfaßt (z. B. Träger 73 bzw. Einzahlung 3, Reihenfolge der erfaßten Bündel 34, 33, 32, 31). Dadurch ergibt sich für die in der Speichereinrichtung 63 aufbewahrten Banderolen eine umgekehrte Reihenfolge innerhalb jeder Einzahlung (z. B. Einzahlung 3, Reihenfolge der Banderolen: 35, 36, 37, 38 statt 38, 37, 36, 35). Dieses Problem kann aber ohne weiteres gelöst werden, indem z. B. ein Vereinzeler verwendet wird, der zuerst die zu unterst liegenden Banknoten erfaßt. Ebenso ist es möglich, die Banknoten einer Einzahlung oder deren Banderolen zu sammeln und vor dem Einfügen in den Träger oder die Speichereinrichtung 63 in der Reihenfolge umzudrehen. Eine weitere Möglichkeit besteht darin, die Umkehrung der Reihenfolge durch die Steuereinrichtung 57 korrigieren zu lassen, indem bei der Ausgabe der Banderolen aus der Speichereinrichtung 63 die veränderte Reihenfolge innerhalb der Einzahlungen berücksichtigt wird.

In einer speziellen Ausführung kann der Sensor 62 eine Scanvorrichtung aufweisen, der alle auf der Banderole enthaltenen Informationen als Bild abtastet und der Steuereinrichtung 57 zur Speicherung übermittelt. Eine solche Scannvorrichtung kann beispielsweise aus einer digitalen Kamera bestehen, welche die Vorder- und/oder Rückseite des Bündels abbildet, insbesondere den Banderolenbereich. Falls dieses Bild zur vollständigen und eindeutigen Identifizierung der Banderole bzw. des Verantwortlichen für die Erstellung der Untereinheit ausreichend ist, kann auf eine weitere physische Zuordnung der Banderole und damit auf eine Speichereinrichtung 63 verzichtet werden. In diesem Fall können die durch den Sensor 62 gelesenen Informationen auf dem Abweichungsprotokoll ausgedruckt werden. Die datentechnische Behandlung der Informationen auf der Banderole ermöglicht es, die Abweichungsprotokolle an zentraler Stelle zu verwalten, zu drucken und/oder auf elektronischem Weg, z. B. per e-Mail, an den Einlieferer weiterzuleiten.

Neben den beschriebenen Ausführungsbeispielen für eine Vorrichtung und ein Verfahren für die Bearbeitung von Banknoten, die als getrennte Einzahlungen vorliegen, ist eine Vielzahl von Abwandlungen möglich.

Beispielsweise können die Markierungen 81 bis 84 der Träger 71 bis 74, die Trennkarten TK sowie die Banderolen 35 bis 37 eindeutig codiert sein, z. B. mittels Ballcencodes, alphanumerischen Zeichen usw., sie können aber auch kontaktlos oder kontaktbehaftet auslesbare und/oder beschreibbare elektrische oder elektronische Schaltkreise, wie Transponder, aufweisen. Für diese Fälle müssen der Sensor 62 für die Erfassung und/oder das Schreiben der Daten I der Einzahlungen, die Sensoren 61, 61' für die Erfassung und/oder das Schreiben der eindeutigen Markierung 81 bis 84 der Träger 71 bis 74 und die Prüfeinrichtung 52 für die Erfassung und/oder das Schreiben der Trennkarten TK entsprechend ausgelegt werden. Falls Daten geschrieben werden können, ist es möglich, die Informationen der Einzahlungen auch in den eindeutigen Markierungen 81 bis 84 und den Trennkarten TK zu speichern. Die gespeicherten Informationen werden dann bei der Bearbeitung der Banknoten in der Banknotenbearbeitungsmaschine 50 bis 57 gelesen (Sensor 61', Prüfeinrichtung 52) und werden bei der Auswertung durch die Steuereinrichtung 57 berücksichtigt. In diesem Fall kann eine Verbindung der Steuereinrichtung 57 mit den Sensoren 61 und 62 unterbleiben.

Sollten einzelne Einzahlungen sehr umfangreich sein, können auch zwei oder mehr Träger für diese sehr umfangreichen Einzahlungen verwendet werden, wobei eine entsprechende Zuordnung der eindeutigen Markierungen der verwendeten Träger zu der Einzahlung vorgenommen wird. In diesem Fall ist eine kontinuierliche Zuführung der Banknoten mit einem unterbrechungsfreiem Wechsel der Träger sinnvoll, damit die Leistungsfähigkeit der Banknotenbearbeitungsmaschine 50 bis 57 maximal ausgenutzt werden kann.

Weiterhin ist es möglich, daß Einzahlungen bzw. Untereinheiten ganz oder teilweise ungebündelt vorliegen, d. h. keine oder nur einige der Untereinheiten einer Einzahlung weisen Banderolen auf. Der Beginn und/oder das Ende einer Einzahlung kann dann durch geeignete andere Mittel gekennzeichnet werden, z. B. besonders gekennzeichnete Trennkarten oder durch die Trennung der Einzahlungen mittels Behältern, in denen jeweils nur eine einzige Einzahlung enthalten ist.

Der Beginn und/ oder das Ende einer Einzahlung kann auch aus der auf der Banderole enthaltenen ersten Information I1 abgeleitet werden, die beispielsweise Auskunft über den Einzahler erhält. Bei gleichem Einzahler in aufeinanderfolgenden Bündeln werden diese als eine Einzahlung mit zugehörigen Untereinheiten behandelt. Bei Änderung des Einzahlers erkennt die Steuereinrichtung automatisch den Beginn einer neuen Einzahlung, ohne daß eine dritte Information I3 notwendig ist.

In einer weiteren Ausprägung der Verwendung der Information I1 kann die Steuereinrichtung 57 so programmiert werden, daß die Bearbeitung der Einzahlungen nach unterschiedlichen Verfahren erfolgt. Ein erster Einzahler kann beispielsweise mit dem Geldbearbeitungszentrum vereinbaren, daß alle Untereinheiten auf dem gleichen Sicherheitsniveau wie Einzahlungen bearbeitet werden und daher nur jeweils eine Untereinheit pro Träger zugelassen wird. Ein zweiter Finzahler kann vereinbaren, daß die Untereinheiten überhaupt nicht getrennt bearbeitet und abgerechnet werden und daher keine Trennkarte zwischen den Untereinheiten verwendet wird. Somit kann das Geldbearbeitungszentrum das Sicherheitsniveau und damit die Bearbeitungskosten entsprechend den Wünschen der Einzahlers anpassen.

Die in einem Transportbehälter enthaltenen Untereinheiten können in Tüten und/oder Kuverts verpackt sein. Diese Tüten und/oder Kuverts können in analoger Weise wie die Banderolen gelesen und bearbeitet werden.

Alle beschriebenen und in den Figuren dargestellten Bearbeitungsschritte, wie z. B. das Abstreifen der Banderolen an der Befüllposition, können manuell oder automatisch durch entsprechende mechanische Mittel durchgeführt werden.

Außerdem können die für die Steuereinrichtung 57 beschriebenen Funktionen von mehreren Steuereinrichtungen, die zusammenarbeiten, erbracht werden. Beispielsweise kann eine Steuereinrichtung für die Banknotenbearbeitungsmaschine vorgesehen sein, die mit einer Steuereinrichtung für die Sensoren 61, 61' und 62, die Transporteinrichtung 60 sowie die Speichereinrichtung 63 bis 66 zusammenarbeitet.

## Patentansprüche

1. Vorrichtung für die Bearbeitung von Banknoten, die als getrennte Einzahlungen vorliegen, mittels einer Banknotenbearbeitungsmaschine (50 bis 57), mit einem Vereinzeler (50), einem Transportsystem (51), einer Prüfeinrichtung (52), einer Ablageeinrichtung (53) und einer Steuereinrichtung (57), wobei eine Transporteinrichtung (60) die Einzahlungen (1 bis 4) enthaltende Träger (71 bis 74) zum Vereinzeler (50) transportiert, einen Sensor (62) zur Erkennung von Anfang und/oder Ende jeder Einzahlung (1 bis 4), eine Befüllposition, an der die Banknoten einer jeden Einzahlung (1 bis 4) in einen separaten Träger (71 bis 74) eingegeben werden, wobei jeder Träger (71 bis 74) die Banknoten jeweils einer Einzahlung zur Bearbeitung zum Vereinzeler (50) transportiert, **dadurch gekennzeichnet, daß** der Sensor (62) zur Erkennung von Anfang und/oder Ende (I3) Informationen (I) der Einzahlungen (1 bis 4) erfaßt, und daß die erfaßten Informationen (I) der Einzahlungen (1 bis 4) mit dem jeweiligen Träger (71 bis 74) einer Einzahlung (1 bis 4) verknüpft werden, wozu eine eindeutige Markierung (81 bis 84) der Träger (71 bis 74) von einem ersten Sensor (61) erfaßt wird, und daß ein zweiter Sensor (61') vorgesehen ist, der die eindeutige Markierung (81 bis 84) der Träger (71 bis 74) für die Bearbeitung der in den Trägern (71 bis 74) enthaltenen Banknoten durch die Banknotenbearbeitungsmaschine (50 bis 57) erfaßt.

2. Vorrichtung nach Anspruch 1, **dadurch gekennzeichnet, daß** an der Befüllposition Trennkarten (TK) eingebbar sind, um die Einzahlungen (1 bis 4) zu unterteilen, wobei die Trennkarten (TK) durch die Prüfeinrichtung (52) erkannt werden, so daß eine Abrechnung der Banknoten der Einzahlungen (1 bis 4) unterteilt werden kann.

3. Vorrichtung nach Anspruch 1 oder 2, **dadurch gekennzeichnet, daß** die Einzahlungen (1 bis 4) von einem oder mehreren je eine Banderole aufweisenden Bündeln von Banknoten gebildet werden, wobei die Banderolen an der Befüllposition von den Bündeln entfernt werden, bevor die Banknoten der Bündel in den jeweiligen Träger (71 bis 74) eingegeben werden.

## Claims

1. An apparatus for processing bank notes present as separate deposits by means of a bank note processing machine (50 to 57) having a singler (50), a transport system (51), a checking device (52), a delivery device (53) and a control device (57), whereby a transport device (60) transports carriers (71 to 74) containing the deposits (1 to 4) to the singler (50), a sensor (62) for detecting the beginning and/or end of each deposit (1 to 4), a filling position at which the bank notes of each deposit (1 to 4) are fed into a separate carrier (71 to 74), each carrier (71 to 74) transporting the bank notes of one deposit to the singler (50) for processing, **characterized in that** the sensor (62) for recognizing the beginning and/or the end (I3) detects information (I) of the deposits (1 to 4), and the detected information (I) of the deposits (1 to 4) is joined to the particular carrier (71 to 74) of a deposit (1 to 4), for which purpose a unique marking (81 to 84) of the carriers (71 to 74) is detected by a first sensor (61), and a second sensor (61') is provided which detects the unique marking (81 to 84) of the carriers (71 to 74) for processing of the bank notes contained in the carriers (71 to 74) by the bank note processing machine (50 to 57).

2. The apparatus according to claim 1, **characterized in that** separation cards (TK) are to be fed at the filling position for subdividing the deposits (1 to 4), the separation cards (TK) being recognized by the checking device (52) so that an accounting for the bank notes of the deposits (1 to 4) can be subdivided.

3. The apparatus according to claim 1 or 2, **characterized in that** the deposits (1 to 4) are formed by one or more bundles of bank notes each having a band, the bands being removed from the bundles at the filling position before the bank notes of the bundles are fed into the particular carrier (71 to 74).

## Revendications

1. Dispositif pour le traitement de billets de banque qui sont présentés comme des versements séparés, au moyen d'une machine de traitement des billets de banque (50 à 57), comportant un séparateur (50), un système de transport (51), un organe de contrôle (52), un organe de réception (53) et un organe de commande (57), un organe de transport (60) transportant les supports (71 à 74) contenant les versements (1 à 4) vers le séparateur (50), un capteur (62) de reconnaissance du début et/ou de la fin de chaque versement (1 à 4), une position de remplissage sur laquelle les billets de banque de chaque versement (1 à 4), sont entrés dans un support séparé (71 à 74), chaque support (71 à 74) transportant les billets de chaque versement vers le séparateur (50) pour qu'ils y soient traités, **caractérisé en ce que** le capteur (62) de reconnaissance du début et/ou de la fin (I3) détecte les informations (I) des versements (1 à 4) et **en ce que** les informations détectées (I) des versements (1 à 4) sont combinées avec le support respectif (71 à 74) d'un versement (1 à 4), de sorte qu'un marquage clair (81 à 84) des supports (71 à 74) est détecté par un premier capteur (61) et qu'un deuxième capteur (61') est prévu pour détecter le marquage clair (81 à 84) des supports (71 à 74) pour le traitement des billets de banque contenus dans les supports (71 à 74) par la machine de traitement des billets de banque (50 à 57).

2. Dispositif selon la revendication 1, **caractérisé en ce que** des cartes de séparation (TK) peuvent être entrées en position de remplissage pour subdiviser les versements (1 à 4), de telle manière que les cartes de séparation (TK) soient reconnues par l'organe de contrôle (52), de sorte qu'un décompte des billets de banque des versements (1 à 4) puisse être subdivisé.

3. Dispositif selon la revendication 1 ou 2, **caractérisé en ce que** les versements (1 à 4) sont formés par un ou plusieurs liasses de billets de banque présentant chacune une bande, les bandes étant enlevées des liasses à la position de remplissage, avant que les billets de banque soient entrés dans les supports (71 à 74) correspondants.
